# EUROPEAN PATENT SPECIFICATION

(11) **EP 3 068 170 B1**
(45) Date of publication and mention of the grant of the patent: **04.12.2019**
(21) Application number: 14795157.8
(22) Date of filing: 20.05.2014
(51) Int. Cl.: H04W 36/00

(54) **MILLIMETER WAVE DIRECTIONAL LINK SWITCHOVER METHOD, LINK SWITCHOVER IMPLEMENTATION DEVICE**
MILLIMETERWELLEN-RICHTFUNKSCHALTVERFAHREN, VORRICHTUNG ZUR IMPLEMENTIERUNG EINER VERBINDUNGSUMSCHALTUNG
PROCEDE DE BASCULEMENT DE LIAISON DIRECTIVE A ONDES MILLIMETRIQUES, DISPOSITIF DE MISE EN OEUVRE DE BASCULEMENT DE LIAISON

(30) Priority: 06.11.2013 CN 201310544247
(43) Date of publication of application: 14.09.2016
(73) Proprietor: ZTE Corporation, Shenzhen, Guangdong 518057 (CN)
(72) Inventor: WANG, Qian, Shenzhen Guangdong 518057 (CN); GUO, Yang, Shenzhen Guangdong 518057 (CN); YU, Zhong, Shenzhen Guangdong 518057 (CN); ZHI, Zhou, Shenzhen Guangdong 518057 (CN)
(74) Representative: Potter Clarkson
(86) International application number: PCT/CN2014/077899
(87) International publication number: WO 2014/180378

(56) References cited:
- EP-A1- 2 282 575
- EP-A2- 1 443 667
- CN-A- 101 159 669
- CN-A- 101 777 997
- CN-A- 102 984 743
- GB-A- 2 499 849
- US-A1- 2006 068 719

## Description

### TECHNICAL FIELD

The present disclosure relates to the field of wireless communication, and more particularly, to a method for switching a millimeter wave directional link, devices for implementing link switching, and a storage medium.

### BACKGROUND

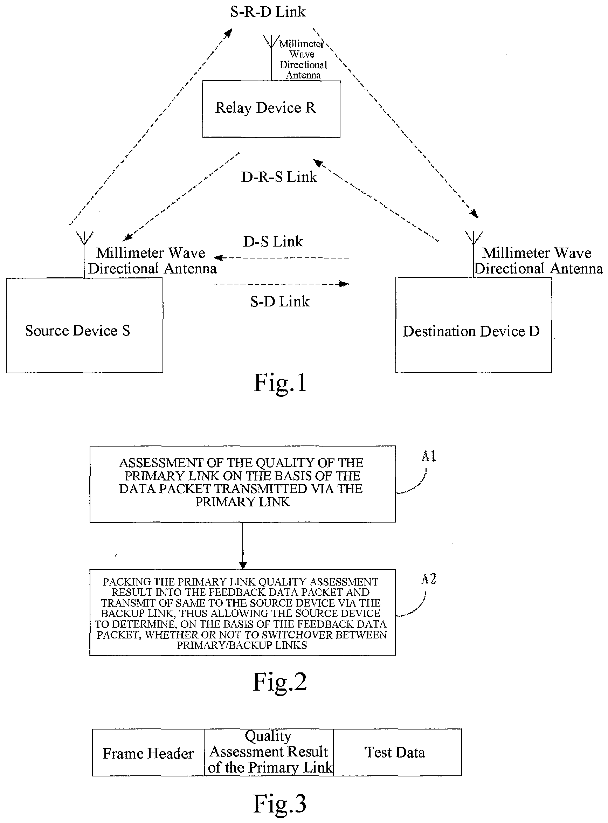

The millimeter wave directional wireless communication technology is one kind of wireless communication technology with a high transmission bandwidth and a gigabit transmission speed. At a typical 60GHz or 45GHz frequency band, the millimeter wave directional wireless communication has a very narrow propagation beam and poor barrier penetrability, and represents a performance similar to the light. Therefore, when a direct link between a source device and a destination device of the millimeter wave directional wireless communication is blocked by a barrier, the propagation beam cannot diffract, thereby the link quality severely deteriorates. As shown in Fig. 1, a solution to solve this problem is to seek and determine a proper relay device R having a millimeter wave directional transmission function between a source device S and a destination device D, establish a relay link (S-R-D), and enables data transmitted by the source device to be forwarded to the destination device via the relay link. Usually, the relay device R needs to be determined before formal data transmission between the source device S and the destination device D, and a direct link is set up between every two of the three devices through signaling interaction and beam forming. Such process is also called as a Relay Link Setup (referred to as RLS) process. The RLS shall be completed before performing the formal data transmission, so that the transmission link can be quickly switched to the relay link (S-R-D) when the direct link (S-D) between the source device S and the destination device D is interrupted or the quality thereof is reduced during data transmission, and vice versa. At present, millimeter wave directional relay link communication methods generally include: when the source device S does not receive an acknowledgement (ACK) frame of the current link for data transmission, switching to another link immediately; or, periodically and alternatively transmitting data on the two links (S-D and S-R-D); or, transmitting data on the two links at the same time, so as to reduce the risk of data packet dropout. These methods do not weigh the link quality of the transmission link, are not sufficiently flexible as well, and are easy to cause wasting of resources. Document US 2006/068719A1 discloses a system and method for optimizing a directional communication link.

### SUMMARY

The disclosure provides example methods for switching a millimeter wave directional link, example devices for implementing link switching, and an example storage medium, to overcome the defects in the existing millimeter wave directional relay link communication process that the link quality of the transmission link is not weighed, the link switching is not flexible, and resources are easily wasted. The invention is defined by the claims.

A first example of the present disclosure provides a method for switching a millimeter wave directional link, being applied in a destination device, wherein the method includes steps executed at a destination device side:
assessing quality of a primary link according to a data packet received from a source device via the primary link; and
packing the quality assessment result of the primary link into a feedback data packet and transmitting the feedback data packet to the source device via a backup link;
the quality assessment result of the primary link in the feedback data packet and quality assessment result of the backup link assessed based on the feedback data packet providing a criterion for the source device to determine whether to switch between the primary and the backup links.

Preferably, the assessing the quality of the primary link according to the data packet received from the source device via the primary link is: detecting a performance index of the primary link according to the data packet received from the source device via the primary link, and assessing the quality of the primary link on the basis of the performance index.

Preferably, the packing the quality assessment result of the primary link into the feedback data packet and transmitting the feedback data packet to the source device via the backup link is: when a given condition is satisfied, packing the quality assessment result of the primary link into a feedback data packet and transmitting the feedback data packet to the source device via the backup link;
the given condition being: the quality assessment result of the primary link is lower than a given decision threshold, or the cumulative time from the completion of assessing the primary link quality reaches a given time threshold.

Preferably, the feedback data packet further includes test data configured to detect a transmission link.

Preferably, a second example of the present disclosure provides a method for switching a millimeter wave directional link, being applied in a source device, including:
assessing quality of a backup link according to a data packet received from a destination device via the backup link;
determining, on the basis of the quality assessment result of the backup link and a quality assessment result of the primary link in the feedback data packet, whether to switch between the primary and backup links.

Preferably, the assessing the quality of the backup link according to the data packet received from the destination device via the backup link is: detecting a performance index of the backup link according to the data packet received from the destination device via the backup link, and assessing the quality of the backup link on the basis of the performance index.

Preferably, the determining, on the basis of the quality assessment result of the backup link and the quality assessment result of the primary link in the feedback data packet, whether to switch between the primary and backup links is: switching between the primary and backup links when the quality assessment result of the backup link is superior to the quality assessment result of the primary link in the feedback data packet;
or,
switching between the primary and backup links when the quality assessment result of the backup link is superior to the quality assessment result of the primary link in the feedback data packet to a certain extent.

A third example of the present disclosure provides a destination device for implementing millimeter wave directional link switching, including:
a primary link quality assessment module configured to assess quality of a primary link according to a data packet received from a source device via the primary link; and
a transmitting decision module configured to pack the quality assessment result of the primary link into a feedback data packet and transmit the feedback data packet to a source device via a backup link;
the quality assessment result of the primary link in the feedback data packet and quality assessment result of the backup link assessed based on the feedback data packet providing a criterion for the source device to determine whether to switch between the primary and backup links.

Preferably, the primary link quality assessment module is configured to detect a performance index of the primary link according to the data packet received from the source device via the primary link, and assess the quality of the primary link on the basis of the performance index.

Preferably, the transmitting decision module is configured to, when a given condition is satisfied, pack the quality assessment result of the primary link into a feedback data packet and transmit the feedback data packet to the source device via the backup link;
the satisfying the given condition being: the quality assessment result of the primary link is lower than a given decision threshold, or the cumulative time from the completion of assessing the primary link quality reaches a given time threshold.

Preferably, the feedback data packet further includes test data configured to detect a transmission link.

A fourth example of the present disclosure provides a source device for implementing millimeter wave directional link switching, including:
a backup link quality assessment module configured to assess quality of a backup link according to a data packet received from a destination device via the backup link; and
a switching decision module configured to determine, on the basis of the quality assessment result of the backup link and the quality assessment result of the primary link in the feedback data packet, whether to switch between the primary and backup links.

Preferably, the backup link quality assessment module is configured to detect a performance index of the backup link according to the data packet received from the destination device via the backup link, and assess the quality of the backup link on the basis of the performance index.

Preferably, the switching decision module is configured to, when the quality assessment result of the backup link is superior to the quality assessment result of the primary link in the feedback data packet, or, when the quality assessment result of the backup link is superior to the quality assessment result of the primary link in the feedback data packet to a certain extent, switch between the primary and backup links.

Preferably, the feedback data packet further includes test data configured to detect a transmission link.

A fifth example of the present disclosure provides a computer storage medium, wherein the computer storage medium is stored with a computer-executable instruction, and the computer-executable instruction is configured to perform the method according to any one of the first examples of the present disclosure.

A sixth example of the present disclosure provides a computer storage medium, wherein the computer storage medium is stored with a computer-executable instruction, and the computer-executable instruction is configured to perform the method according to any one of the second examples of the present disclosure.

By employing the foregoing technical solutions, the present disclosure at least has the following advantages.

The method for switching a millimeter wave directional link, the devices for implementing link switching and the storage medium according to the examples of the present disclosure can assess the quality of a direct link and a relay link between the source device and the destination device, determine whether to switch the current transmission link on the basis of the assessment result. The present disclosure conducts a switching operation after weighing the quality of the links, has a link switching process that is more flexible than the related art, and can reduce wasting of resources and ensure the transmission reliability at the same time.

### BRIEF DESCRIPTION OF THE DRAWINGS

Fig. 1 is a schematic diagram showing a millimeter wave directional relay link system in the prior art;
Fig. 2 is a flow chart of steps executed at a destination device side in a method for switching a millimeter wave directional link provided by a first example of the present disclosure;
Fig. 3 is a schematic diagram showing a preferred frame format of a feedback data packet provided by the first example of the present disclosure;
Fig. 4 is a flow chart of steps executed at a source device side in the method for switching a millimeter wave directional link provided by the first example of the present disclosure;
Fig. 5 is a block diagram showing a structure of a destination device for implementing millimeter wave directional link switching provided by a second example of the present disclosure;
Fig. 6 is a block diagram showing a structure of a source device for implementing millimeter wave directional link switching provided by a third example of the present disclosure;
Fig. 7 is a schematic diagram showing a millimeter wave directional relay link system provided by an application example of the present disclosure;
Fig. 8 is a flow chart of a method for link switching of the millimeter wave directional relay link system provided by the application example of the present disclosure;
Fig. 9 is a schematic diagram showing a time sequence situation of switching from an S-D link to an S-R-D link provided by the application example of the present disclosure;
Fig. 10 is a schematic diagram showing a time sequence situation of switching from the S-R-D link to the S-D link provided by the application example of the present disclosure; and
Fig. 11 is a block diagram showing a structure of a device for implementing the methods provided by the examples of the present disclosure according to the examples of the present disclosure.

### DETAILED DESCRIPTION

Hereinafter, preferred examples of the disclosure would be explained in details with reference to the drawings. It should be understood that the preferred examples described hereinafter are to explain and interpret the disclosure only, but are not intended to limit the disclosure.

According to a first example of the present disclosure, a direct link and a relay link that interact as both primary link and backup link are respectively set up between a source device (an information source device) and a destination device (an information destination device). Under a normal communication state, the source device transmits a data packet to the destination device via the primary link. A method for switching a millimeter wave directional link includes the specific steps as follows.

### I. Steps executed at a destination device side, as shown in Fig. 2, include the following steps.

In step A1, quality of a primary link is assessed according to a data packet transmitted via the primary link.

To be specific, a performance index of the primary link is detected according to the data packet transmitted via the primary link, and the quality of the primary link is assessed on the basis of the performance index. The data packet at least includes one of the followings: a data frame, a control frame, and a management frame.

It is known in the art that a performance index of a transmission link may be detected according to information of a frame header and a valid data portion of a millimeter wave frequency band frame. The performance index may refer to all parameters that may be used for measuring the quality of the link, for instance: a signal to noise ratio, a code error rate, and a frame error rate, which would not be described in details herein. Then, the quality assessment result of the primary link is obtained according to the specific value of the performance index. For instance, the quality assessment result of the primary link may be determined on the basis of the code error rate only, and may also be determined by taking the code error rate and other parameters into account.

In step A2, the quality assessment result of the primary link is packed into a feedback data packet and transmitted to a source device via a backup link, so that the source device determines whether to switch between the primary and backup links on the basis of the feedback data packet.

To be specific, the optimal solution in step A2 is as follows: when a given condition is satisfied, the quality assessment result of the primary link is packed into a feedback data packet and transmitted to the source device via the backup link. The feedback data packet particularly includes: a control frame configured to carry the link quality assessment result; however, it is not excluded in the examples of the present disclosure to use other types of frames in the feedback data packet for carrying the link quality assessment result. Preferably, the feedback data packet further includes: test data configured to detect a transmission link, wherein the frame format of the feedback data packet, as shown in Fig. 3, includes a frame header, the link quality assessment result and the test data in sequence.

The given condition includes: the quality assessment result of the primary link is lower than a given decision threshold, or cumulative time from completion of assessing the primary link quality reaches a given time threshold.

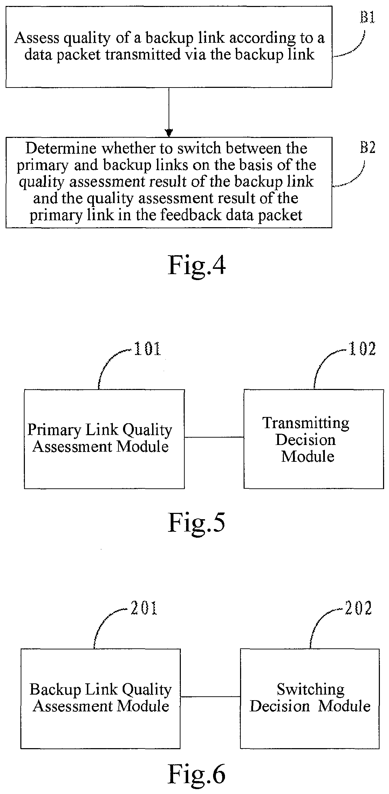

### II. Steps executed at a source device side, as shown in Fig. 4, include the following steps.

In step B1, quality of a backup link is assessed according to a feedback data packet transmitted via the backup link.

To be specific, a performance index of the backup link is detected according to the feedback data packet transmitted via the backup link, and the quality of the backup link is assessed on the basis of the performance index.

In step B2, whether to switch between a primary link and the backup link is determined on the basis of the quality assessment result of the backup link and a quality assessment result of the primary link in the feedback data packet.

To be specific, when the quality assessment result of the backup link is superior to the quality assessment result of the primary link in the feedback data packet, or, when the quality assessment result of the backup link is superior to the quality assessment result of the primary link in the feedback data packet to a certain extent, the primary link and the backup link are switched, that is, the roles of the primary link and the backup link are switched, and the primary link and the backup link still interact as both primary link and backup link. The above-mentioned extent may be set according to requirements.

It should be illustrated that since using a relay link for communication would consume more resources than that of using a direct link for direct communication, more consideration factors, such as resource consumption, may be added into the link switching condition when the primary link is a direct link while the backup link is a relay link in a relatively complicated design. For instance, a threshold is set for the superior extent of the quality assessment result of the backup link to that of the primary link, and the primary and backup links are switched only when the superior extent of the quality assessment result of the backup link to that of the primary link reaches the set threshold. In this way, resource consumption can be reduced as much as possible, and a trade-off is made between resource consumption and transmission quality.

A second example of the present disclosure introduces a destination device for implementing millimeter wave directional link switching on the basis of the method for directional link switching in the first example, wherein a direct link and a relay link that interact as both primary link and backup link are set up between a source device and the destination device. As shown in Fig. 5, the destination device includes a primary link quality assessment module 101 and a transmitting decision module 102.
1) The primary link quality assessment module 101 is configured to assess quality of a primary link according to a data packet transmitted via the primary link.
   To be specific, the primary link quality assessment module 101 is configured to detect a performance index of the primary link according to the data packet transmitted via the primary link, and assess the quality of the primary link on the basis of the performance index. The data packet at least includes one of the followings: a data frame, a control frame, and a management frame.
   It is known in the art that a performance index of a transmission link may be detected according to information of a frame header and a valid data portion of a millimeter wave frequency band frame. The performance index may refer to all parameters that may be used for measuring the quality of the link, for instance: a signal to noise ratio, a code error rate and a frame error rate, which would not be described in details herein. The quality assessment result of the primary link would be obtained subsequently according to the specific value of the performance index. For instance, the quality assessment result of the primary link may be determined on the basis of the code error rate only, and may also be determined by taking the code error rate and other parameters into account.
2) The transmitting decision module 102 is configured to pack the quality assessment result of the primary link into a feedback data packet and transmit the feedback data packet to the source device via a backup link, so that the source device determines whether to switch between the primary and backup links on the basis of the feedback data packet.

To be specific, a preferred solution is that the transmitting decision module 102 is configured to, when a given condition is satisfied, pack the quality assessment result of the primary link into a feedback data packet and transmit the feedback data packet to the source device via the backup link.

The given condition includes at least one of the following conditions: the quality assessment result of the primary link is lower than a given decision threshold, and the cumulative time from the completion of assessing the primary link quality reaches a given time threshold.

The feedback data packet particularly includes: a control frame configured to carry the link quality assessment result; however, it is not excluded to use other types of frames in the feedback data packet for carrying the link quality assessment result in the present disclosure.

Preferably, the feedback data packet further includes: test data configured to detect a transmission link. Then, the source device may detect the performance index of the transmission link according to both the test data and the information of the frame header, or may detect the performance index of the transmission link directly according to the information of the frame header of the control frame and the valid data portion in the feedback data packet.

The frame format of the feedback data packet, as shown in Fig. 3, includes a frame header, the link quality assessment result and the test data in turn.

A third example of the present disclosure introduces a source device for implementing millimeter wave directional link switching on the basis of the method for directional link switching in the first example, wherein a direct link and a relay link that interact as both primary link and backup link are set up between the source device and the destination device according to the second example. As shown in Fig. 6, the source device includes a backup link quality assessment module 201 and a switching decision module 202.
1) The backup link quality assessment module 201 is configured to assess quality of a backup link according to a feedback data packet transmitted via the backup link.
   To be specific, the backup link quality assessment module 201 is configured to detect a performance index of the backup link according to the feedback data packet transmitted via the backup link, and assess the quality of the backup link on the basis of the performance index. The feedback data packet particularly includes: a control frame configured to carry the link quality assessment result; however, it is not excluded to use other types of frames in the feedback data packet for carrying the link quality assessment result in the present disclosure. Preferably, the feedback data packet further includes test data configured to detect a transmission link. The backup link quality assessment module 201 may detect the performance index of the transmission link according to both the test data and the information of the frame header, or may detect the performance index of the transmission link directly according to the information of the frame header of the control frame and the valid data portion in the feedback data packet.
2) The switching decision module 202 is configured to determine, on the basis of the quality assessment result of the backup link and the quality assessment result of the primary link in the feedback data packet, whether to switch between the primary and backup links.

To be specific, the switching decision module 202 is configured to, when the quality assessment result of the backup link is superior to the quality assessment result of the primary link in the feedback data packet, or, when the quality assessment result of the backup link is superior to the quality assessment result of the primary link in the feedback data packet to a certain extent, switch between the primary and backup links. The superior extent may be set according to requirements.

It should be illustrated that because using a relay link for communication would consume more resources than that of using a direct link for direct communication, more consideration factors, such as resource consumption, may be added into link switching conditions when the primary link is a direct link while the backup link is a relay link in a relatively complicated design. For instance, a threshold is set for the superior extent of the quality assessment result of the backup link to that of the primary link, and the primary and backup links are switched only when the superior extent of the quality assessment result of the backup link to that of the primary link reaches the set threshold. In this way, resource consumption can be reduced as much as possible, and a trade-off is made between resource consumption and transmission quality.

An application example of the present disclosure is introduced on the basis of the foregoing examples.

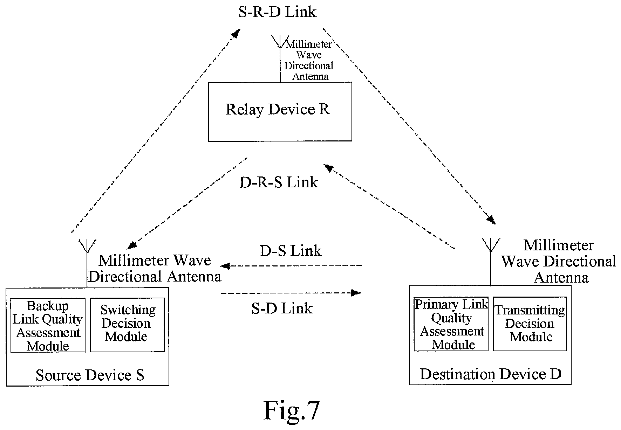

The application example of the present disclosure is on the basis of the millimeter wave directional relay link system as shown in Fig. 7. The system includes a source device S, a destination device D and a relay device R, wherein the source device S is at least provided with a millimeter directional antenna, a backup link quality assessment module and a switching decision module. The millimeter wave directional antenna is configured to directionally receive and transmit a millimeter wave frequency band data packet, and the millimeter wave frequency band data packet at least includes one of the followings: a data frame, a control frame, a management frame, and the like. The backup link quality assessment module is configured to assess quality of the backup link, and may assess quality of the link transmitting the data packet according to the received millimeter wave frequency band data packet. The switching decision module compares the quality of the current primary link with the quality of the backup link to determine whether to switch from the current primary link to the backup link. For example, when the quality of the backup link is superior to the quality of the current primary link, switching is conducted. If the current link is a direct link between the source device S and the destination device D, then a relay link between the source device S and the destination device D through the relay device R is a backup link, and vice versa.

The destination device D is at least provided with a millimeter directional antenna, a primary link quality assessment module and a transmitting decision module. The millimeter wave directional antenna is configured to directionally receive and transmit a millimeter wave frequency band data packet, and the millimeter wave frequency band data packet at least includes one of the followings: a data frame, a control frame, a management frame, and the like. The primary link quality assessment module is configured to assess the link quality, and may assess the quality of the link transmitting the data packet according to a code error rate, a signal to noise ratio and the like of the received millimeter wave frequency band data packet. The transmitting decision module is configured to decide whether to pack the quality assessment result of the primary link into a frame and transmit the frame. For example, a decision threshold is set as a certain link quality assessment value, and when a result given by the primary link quality assessment module is lower than the value, the assessment result is packed into a frame and transmitted to the source device immediately. Moreover, the decision threshold may be set as a certain cumulative time value after the assessment of the primary link quality assessment module, and when the cumulative time is reached, the assessment result is packed and transmitted to the source device immediately.

The relay device R is at least provided with a millimeter wave directional antenna configured to directionally receive and forward the millimeter wave frequency band data packet from the source device or the destination device.

Before formal data transmission, a direct link and a relay link have been set up among the above-mentioned source device S, the destination device D and the relay device R through signaling interaction and beam forming. In this way, the rapidity of the link switching process may be ensured during data transmission. The set up links include: a forward link S-D from the source device to the destination device; a reverse link D-S from the destination device to the source device; a forward link S-R-D from the source device to the destination device via the relay device; and a reverse link D-R-S from the destination device to the source device via the relay device.

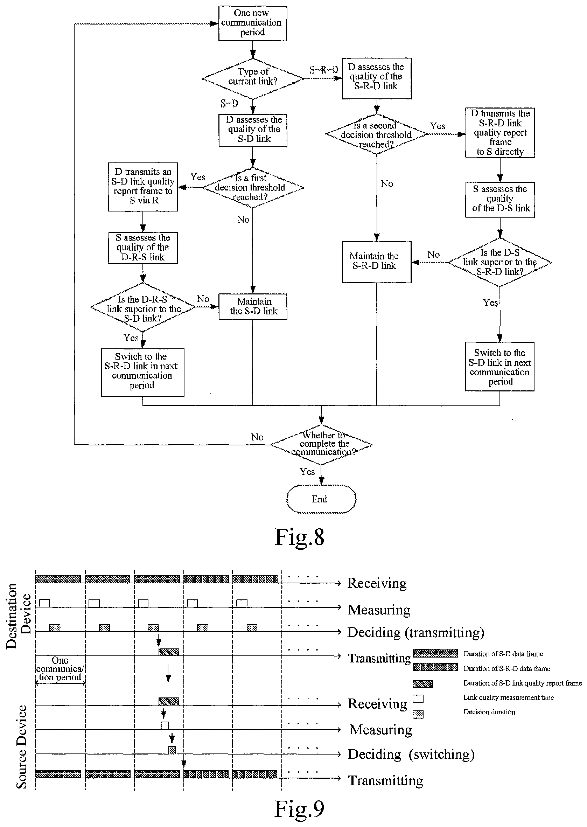

The flow of the method for link switching of the millimeter wave directional relay link system according to the application example of the present disclosure is as shown in Fig. 8, and includes two situations according to the current link by which the source device transmits data to the destination device in the current communication period.

The first situation is that when the current link is S-D:
the destination device assesses the quality of the S-D link by using the primary link quality assessment module according to a received data frame of the S-D link, and determines, according to the quality assessment result of the S-D link, whether the result reaches a first decision threshold by using the transmitting decision module. For example, when the result given by the primary link quality assessment module is lower than the first decision threshold, or when the duration after the assessment of the primary link quality assessment module exceeds a certain cumulative time threshold, the assessment result is packed into an S-D link quality report frame (i.e., a control frame carrying the quality assessment result of the S-D link) immediately and transmitted to the source device through the D-R-S link. It is noted that when adopting the solution of transmitting the S-D link quality report frame immediately upon reaching the cumulative time threshold after assessment, the source device is enabled to obtain the quality of the S-D link in each communication period; however, such solution would consume more resources. It is noteworthy that the S-D link quality report frame may also include a piece of test data so that the link quality assessment module of the source device can assess the quality of the link more accurately according to the link quality report frame, wherein the piece of test data may be transmitted according to a modulation coding mechanism identical to the data frame received by the destination device. The source device receiving the report frame may assess the quality of the D-R-S link on the basis of the test data.

The source device receives the S-D link quality report frame. Because the frame is received via the D-R-S link, the backup link quality assessment module of the source device may assess the quality of the D-R-S link according to the frame, and then transmit the quality of the D-R-S link obtained via assessment together with the quality of the S-D link indicated in the report frame to the switching decision module. Due to the reciprocity of links, the quality of the D-R-S link is approximately equal to the quality of the S-R-D. Therefore, the switching decision module determines whether to switch the current S-D link to the S-R-D link according to the quality of the S-D link and the quality of the D-R-S link. For example, the link switching condition is simply set as that the quality of the D-R-S link is superior to the quality of the S-D link, then switching is conducted when the quality of the D-R-S link is superior to the quality of the S-D link. It should be illustrated that because using an S-R-D link for communication would usually consume more resources than that of using an S-D link for direct communication, in a relatively complicated design, more consideration factors, such as resource consumption, may be added into the link switching condition.

The second situation is that when the current link is S-R-D:
the destination device assesses the quality of the S-R-D link using the primary link quality assessment module according to a received data frame of the S-R-D link, and determines, according to the quality assessment result of the S-R-D link, whether the result reaches a second decision threshold using the transmitting decision module. For example, when the result given by the link quality assessment module is lower than the second decision threshold (the second decision threshold may either be the same as or different from the first decision threshold recorded in the first situation), or when the duration after the assessment of the primary link quality assessment module exceeds a certain cumulative time threshold, the assessment result is packed into an S-R-D link quality report frame immediately and transmitted to the source device through the D-S link. It is noted that when both the S-D link and the S-R-D link are unclogged, using an S-D link for communication would consume less resources than that of using an S-R-D link; therefore, in the case that the current link is S-R-D, the cumulative time threshold can be used as a decision manner, so that the S-R-D link quality report frame may be periodically transmitted to the source device. In this way, once the D-S link is unclogged, the source device would have an opportunity to switch to the S-D link immediately without waiting for decline of the quality of the S-R-D link. Furthermore, the S-R-D link quality report frame may also include a piece of test data, and the source device receiving the report frame may assess the quality of the D-S link on the basis of the test data.

The source device receives the S-R-D link quality report frame. Because the frame is received via the D-S link, the link quality assessment module of the source device may assess the quality of the D-S link according to the frame, and then transmit the quality of the D-S link obtained via assessment together with the quality of the S-R-D link indicated in the report frame to the switching decision module. Due to the reciprocity of links, the quality of the D-S link is approximately equal to the quality of the S-D link. Therefore, the switching decision module determines whether to switch the current S-R-D link to the S-D link according to the quality of the S-R-D link and the quality of the D-S link. For example, the link switching condition is simply set as that the quality of the D-S link is superior to the quality of the S-R-D link, then switching is conducted when the quality of the D-S link is superior to the quality of the S-R-D link. It should be illustrated that because using an S-D link for communication would usually consume less resources than that of using an S-R-D link for communication, switching can be conducted immediately when the quality of the D-S link is superior to the quality of the S-R-D link.

Fig. 9 is a schematic diagram showing a time sequence situation of switching the S-D link to the S-R-D link, and gives the durations of corresponding process flows during the communication process between the source device and the destination device respectively. Fig. 9 depicts the situation in which the destination device transmits an S-D link quality report frame only when the quality of the S-D link is lower than a certain link quality threshold, and the source device implements a D-R-S link quality measurement, a decision and a link switching in turn according to the report frame.

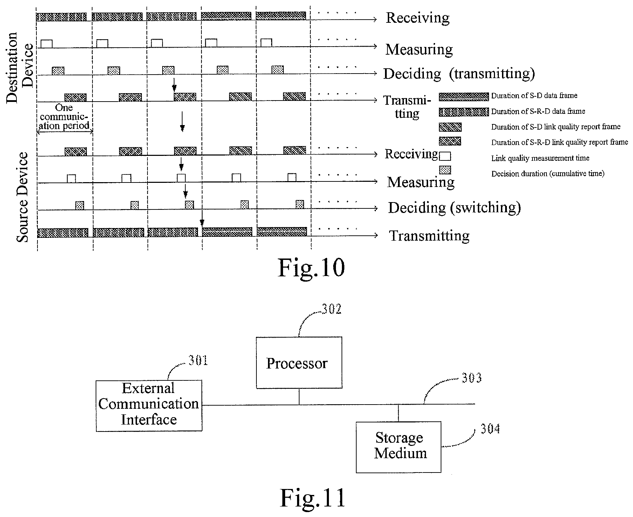

Fig. 10 is a schematic diagram showing a time sequence situation of switching the S-R-D link to the S-D link, and gives the durations of corresponding process flows during the communication process between the source device and the destination device respectively. Fig. 10 depicts the situation in which the destination device uses the time cumulative value as a decision threshold to periodically transmit a D-R-S link quality report frame, and the source device implements a D-S link quality measurement, a decision and a link switching in turn according to the report frame.

The method for switching a millimeter wave directional link as well as the source device and the destination device for implementing link switching according to the examples of the present disclosure may assess the qualities of a direct link and a relay link between the source device and the destination device, and determine whether to switch the current transmission link on the basis of the assessment result. According to the present disclosure, a switching operation is conducted after weighing the quality of the links, the link switching process is more flexible than that in the related art, the wasting of resources is reduced, and the transmission reliability is ensured.

The examples of the present disclosure also provide a computer storage medium, wherein the computer storage medium is stored with a computer-executable instruction, and the computer-executable instruction is configured to perform the method according to any one of the steps A1 and A2 of the first example, for details please refer to the method described in Fig. 2.

The examples of the present disclosure also records another computer storage medium, wherein the computer storage medium is stored with a computer-executable instruction, and the computer-executable instruction is configured to perform the method according to the steps B1 and B2 of the first example, for details please refer to the method described in Fig. 4.

The foregoing computer storage medium may be an optical disk, a USB disk, a DVD, a magnetic tape, or the like, and is preferably a non-transitory storage medium.

The examples of the present disclosure also provide a device for implementing the first example and the second example of the present disclosure. As shown in Fig. 11, the device includes a processor 302, a storage medium 304 and at least one external communication interface 301. The processor 302, the storage medium 304 and the external communication interface 301 are all connected via a bus 303. The processor 302 may be an electronic component with a processing function, such as a microprocessor, a central processing unit, a digital signal processor, and a programmable logic array.

The storage medium 304 is stored with a computer-executable instruction; and any one of the following two solutions may be implemented by the processor 302 through executing the computer-executable instruction stored in the storage medium 304.
First solution:
   the quality of a primary link is assessed according to a data packet transmitted via the primary link; and
   the quality assessment result of the primary link is packed into a feedback data packet and transmitted to a source device via a backup link; wherein, the feedback data packet is a criterion for the source device to determine whether to switch between the primary and backup links.
Second solution:
   the quality of the backup link is assessed according to a feedback data packet transmitted via the backup link; and
   whether to switch between the primary and backup links is determined on the basis of the quality assessment result of the backup link and the quality assessment result of the primary link in the feedback data packet.

To be specific, the structure in Fig. 11 may either be a part of the destination device in the second example, or be a part of the source device in the third example.

## Claims

1. A method for switching a millimeter wave directional link between a primary link and a backup link with a destination device (D), wherein one of said links is a direct link and the other is a relay link, the method comprising the following steps carried out in a source device (S):
assessing (B1) quality of the backup link according to a feedback data packet received from the destination device (D) via the backup link; and
determining (B2), on the basis of said quality assessment result of the backup link and on the basis of a quality assessment result of the primary link packed into said feedback data packet, whether to switch between the primary link and the backup link.

2. The method according to claim 1, wherein
the assessing (B1) the quality of the backup link according to the feedback data packet received from the destination device (D) via the backup link is: detecting a performance index of the backup link according to the feedback data packet received from the destination device (D) via the backup link, and assessing the quality of the backup link on the basis of the performance index.

3. The method according to claim 1, wherein the determining (B1), on the basis of the quality assessment result of the backup link and the quality assessment result of the primary link in the feedback data packet, whether to switch between the primary link and the backup link is:
switching between the primary link and the backup link when the quality assessment result of the backup link is superior to the quality assessment result of the primary link in the feedback data packet;
or,
switching between the primary link and the backup link when the quality assessment result of the backup link is superior to the quality assessment result of the primary link in the feedback data packet to a certain extent.

4. A method for switching a millimeter wave directional link between a primary link and a backup link, wherein one of said links is a direct link and the other is a relay link according to claim 1, wherein the method comprises the following additional steps carried out in a destination device (D):
assessing (A1), by the destination device (D), quality of the primary link according to a data packet received from the source device (S) via the primary link;
packing (A2), by the destination device (D), quality assessment result of the primary link into a feedback data packet and transmitting the feedback data packet to the source device (S) via the backup link.

5. The method according to claim 4, wherein
the assessing (A1), by the destination device (D), the quality of the primary link according to the data packet received from the source device (S) via the primary link is:
detecting a performance index of the primary link according to the data packet received from the source device (S) via the primary link, and assessing the quality of the primary link on the basis of the performance index.

6. The method according to claim 4, wherein
the packing (A2), by the destination device (D), the quality assessment result of the primary link into the feedback data packet and transmitting the feedback data packet to the source device (S) via the backup link is: when a given condition is satisfied, packing the quality assessment result of the primary link into the feedback data packet and transmitting the feedback data packet to the source device (S) via the backup link;
satisfying the given condition is: the quality assessment result of the primary link is lower than a given decision threshold, or cumulative time from completion of assessing the primary link quality reaches a given time threshold.

7. The method according to claim 4, wherein the feedback data packet further comprises test data configured to detect a transmission link.

8. A source device arranged to carry out millimeter wave directional link switching between a primary link and a backup link with a destination device (D), wherein one of said links is a direct link and the other is a relay link, wherein the source device (S) comprises:
a backup link quality assessment module (201) configured to assess quality of the backup link according to a feedback data packet received from the destination device (D) via the backup link; and
a switching decision module (202) configured to determine, on the basis of said quality assessment result of the backup link and on the basis of a quality assessment result of the primary link packed into said feedback data packet, whether to switch between the primary link and the backup link.

9. The source device according to claim 8, wherein
the backup link quality assessment module (201) is configured to detect a performance index of the backup link according to the data packet received from the destination device (D) via the backup link, and assess the quality of the backup link on the basis of the performance index.

10. The source device according to claim 8, wherein
the switching decision module (202) is configured to, when the quality assessment result of the backup link is superior to the quality assessment result of the primary link in the feedback data packet, or, when the quality assessment result of the backup link is superior to the quality assessment result of the primary link in the feedback data packet to a certain extent, switch between the primary link and the backup link.

11. The source device according to claim 8, wherein the feedback data packet further comprises test data configured to detect a transmission link.

12. A system arranged to carry out millimeter wave directional link switching between a primary link and a backup link, wherein one of said links is a direct link and the other is a relay link, the system comprising:
the source device (S) of claim 8; and
a destination device which comprises:
a primary link quality assessment module (101) configured to assess quality of the primary link according to a data packet received from the source device (S) via the primary link; and
a transmitting decision module (102) configured to pack the quality assessment result of the primary link into a feedback data packet and transmit the feedback data packet to the source device (S) via the backup link.

13. The system according to claim 12, wherein
the primary link quality assessment module (101) is configured to detect a performance index of the primary link according to the data packet received from the source device (S) via the primary link, and assess the quality of the primary link on the basis of the performance index.

14. The system according to claim 12, wherein
the transmitting decision module (102) is configured to, when a given condition is satisfied, pack the quality assessment result of the primary link into a feedback data packet and transmit the feedback data packet to the source device (S) via the backup link; and
the given condition is: the quality assessment result of the primary link is lower than a given decision threshold, or cumulative time from completion of assessing the primary link quality reaches a given time threshold.

15. The system according to claim 12, wherein the feedback data packet further comprises test data configured to detect a transmission link.

## Patentansprüche

1. Verfahren zum Umschalten einer Millimeterwellen-Richtungsverbindung zwischen einer Primärverbindung und einer Sicherungsverbindung mit einer Zielvorrichtung (D), wobei eine der Verbindungen eine direkte Verbindung ist und die andere eine Relaisverbindung ist, wobei das Verfahren die folgenden Schritte umfasst, die in einer Quellvorrichtung (S) ausgeführt werden:
Bewerten (B1) der Qualität der Sicherungsverbindung gemäß einem Rückmeldungsdatenpaket, das von der Zielvorrichtung (D) über die Sicherungsverbindung empfangen wird; und
Bestimmen (B2), auf der Grundlage des Qualitätsbewertungsergebnisses der Sicherungsverbindung und auf der Grundlage eines Qualitätsbewertungsergebnisses der in das Rückkopplungsdatenpaket gepackten Primärverbindung, ob zwischen der Primärverbindung und der Sicherungsverbindung umgeschaltet werden soll.

2. Verfahren nach Anspruch 1, wobei
das Bewerten (B1) der Qualität der Sicherungsverbindung nach dem von der Zielvorrichtung (D) über die Sicherungsverbindung empfangenen Rückkopplungsdatenpaket Folgendes ist:
Bestimmen eines Leistungsindex der Sicherungsverbindung gemäß dem Rückmeldungsdatenpaket, das von der Zielvorrichtung (D) über die Sicherungsverbindung empfangen wird; und Bewerten der Qualität der Sicherungsverbindung auf der Grundlage des Leistungsindex.

3. Verfahren nach Anspruch 1, wobei das Bestimmen (B1), auf der Grundlage des Qualitätsbewertungsergebnisses der Sicherungsverbindung und des Qualitätsbewertungsergebnisses der Primärverbindung in dem Rückkopplungsdatenpaket, ob zwischen der Primärverbindung und der Sicherungsverbindung umgeschaltet werden soll, Folgendes ist:
Umschalten zwischen der Primärverbindung und der Sicherungsverbindung, wenn das Qualitätsbewertungsergebnis der Sicherungsverbindung dem Qualitätsbewertungsergebnis der Primärverbindung in dem Rückkopplungsdatenpaket überlegen ist; oder
Umschalten zwischen der Primärverbindung und der Sicherungsverbindung, wenn das Qualitätsbewertungsergebnis der Sicherungsverbindung dem Qualitätsbewertungsergebnis der Primärverbindung in dem Rückkopplungsdatenpaket in einem gewissen Ausmaß überlegen ist.

4. Verfahren zum Umschalten einer Millimeterwellen-Richtungsverbindung zwischen einer Primärverbindung und einer Sicherungsverbindung, wobei eine der Verbindungen eine direkte Verbindung ist und die andere eine Relaisverbindung ist, nach Anspruch 1, wobei das Verfahren die folgenden zusätzlichen Schritte umfasst, die in einer Zielvorrichtung (D) ausgeführt werden:
Bewerten (A1), durch die Zielvorrichtung (D), der Qualität der Primärverbindung durch die Zielvorrichtung (D) gemäß einem Datenpaket, das von der Quellvorrichtung (S) über die Primärverbindung empfangen wird;
Packen (A2), durch die Zielvorrichtung (D), des Qualitätsbewertungsergebnisses der Primärverbindung in ein Rückmeldedatenpaket und Übertragen des Rückmeldedatenpakets an die Quellvorrichtung (S) über die Sicherungsverbindung.

5. Verfahren nach Anspruch 4, wobei
das Bewerten (A1), durch die Zielvorrichtung (D), der Qualität der Primärverbindung gemäß dem Datenpaket, das von der Quellvorrichtung (S) über die Primärverbindung empfangen wird, Folgendes ist:
Ermitteln eines Leistungsindex der Primärverbindung gemäß dem über die Primärverbindung von der Quellvorrichtung (S) empfangenen Datenpaket und Bewerten der Qualität der Primärverbindung auf der Grundlage des Leistungsindex.

6. Verfahren nach Anspruch 4, wobei
das Packen (A2), durch die Zielvorrichtung (D), des Qualitätsbewertungsergebnisses der Primärverbindung in ein Rückmeldedatenpaket und Übertragen des Rückmeldedatenpakets an die Quellvorrichtung (S) über die Sicherungsverbindung, Folgendes ist: wenn eine vorgegebene Bedingung erfüllt ist, Packen des Qualitätsbewertungsergebnisses der Primärverbindung in das Rückmeldedatenpaket und Übertragen des Rückmeldedatenpakets an die Quellvorrichtung (S) über die Sicherungsverbindung;
wobei das Erfüllen der vorgegebenen Bedingung Folgendes ist: das Ergebnis der Qualitätsbewertung der Primärverbindung liegt unter einem bestimmten Entscheidungsschwellenwert, oder die kumulative Zeit ab Abschluss der Bewertung der Primärverbindungsqualität erreicht einen bestimmten Zeitschwellenwert.

7. Verfahren nach Anspruch 4, wobei das Rückkopplungsdatenpaket weitere Testdaten umfasst, konfiguriert, eine Übertragungsverbindung zu erkennen.

8. Quellvorrichtung, angeordnet, das Umschalten einer Millimeterwellen-Richtungsverbindung zwischen einer Primärverbindung und einer Sicherungsverbindung mit einer Zielvorrichtung (D) auszuführen, wobei eine der Verbindungen eine direkte Verbindung ist und die andere eine Relaisverbindung ist, wobei die Quellvorrichtung (S) Folgendes umfasst:
ein Sicherungsverbindungsqualitätsbewertungsmodul (201), konfiguriert zum Bewerten der Qualität der Sicherungsverbindung gemäß einem Rückmeldungsdatenpaket, das von der Zielvorrichtung (D) über die Sicherungsverbindung empfangen wird; und
ein Umschaltentscheidungsmodul (202), konfiguriert zum Bestimmen, auf der Grundlage des Qualitätsbewertungsergebnisses der Sicherungsverbindung und auf der Grundlage eines Qualitätsbewertungsergebnisses der in das Rückkopplungsdatenpaket gepackten Primärverbindung, ob zwischen der Primärverbindung und der Sicherungsverbindung umgeschaltet werden soll.

9. Quellvorrichtung nach Anspruch 8, wobei
das Sicherungsverbindungsqualitätsbewertungsmodul (201) konfiguriert ist zum Erfassen eines Leistungsindex der Sicherungsverbindung gemäß dem Datenpaket, das von der Zielvorrichtung (D) über die Sicherungsverbindung empfangen wird, und zum Bewerten der Qualität der Sicherungsverbindung auf der Grundlage des Leistungsindex.

10. Quellenvorrichtung nach Anspruch 8, wobei
das Umschaltentscheidungsmodul (202) dazu konfiguriert ist, wenn das Qualitätsbewertungsergebnis der Sicherungsverbindung dem Qualitätsbewertungsergebnis der Primärverbindung in dem Rückkopplungsdatenpaket überlegen ist, oder wenn das Qualitätsbewertungsergebnis der Sicherungsverbindung dem Qualitätsbewertungsergebnis der Primärverbindung in dem Rückkopplungsdatenpaket in einem gewissen Ausmaß überlegen ist, zwischen der Primärverbindung und der Sicherungsverbindung umzuschalten.

11. Quellenvorrichtung nach Anspruch 8, wobei das Rückkopplungsdatenpaket weitere Testdaten umfasst, konfiguriert, eine Übertragungsverbindung zu erkennen.

12. System, angeordnet, das Umschalten einer Millimeterwellen-Richtungsverbindung zwischen einer Primärverbindung und einer Sicherungsverbindung auszuführen, wobei eine der Verbindungen eine direkte Verbindung ist und die andere eine Relaisverbindung ist, wobei das System Folgendes umfasst:
die Quellvorrichtung (S) nach Anspruch 8; und
eine Zielvorrichtung, die Folgendes umfasst:
ein Primärverbindungsqualitätsbewertungsmodul (101), das konfiguriert ist, die Qualität der Primärverbindung gemäß einem Datenpaket, das von der Quellvorrichtung (S) über die Primärverbindung empfangen wird, auszuwerten; und
ein Übertragungsentscheidungsmodul (102), das konfiguriert ist, zum Packen des Qualitätsbewertungsergebnisses der Primärverbindung in ein Rückmeldedatenpaket und zum Übertragen des Rückmeldedatenpakets an die Quellvorrichtung (S) über die Sicherungsverbindung.

13. System nach Anspruch 12, wobei
das Primärverbindungsqualitätsbewertungsmodul (101) konfiguriert ist zum Ermitteln eines Leistungsindex der Primärverbindung gemäß dem über die Primärverbindung von der Quellvorrichtung (S) empfangenen Datenpaket und zum Bewerten der Qualität der Primärverbindung auf der Grundlage des Leistungsindex.

14. System nach Anspruch 12, wobei
das Übermittlungsentscheidungsmodul (102) konfiguriert ist, wenn eine vorgegebene Bedingung erfüllt ist, zum Packen des Qualitätsbewertungsergebnisses der Primärverbindung in ein Rückmeldedatenpaket und zum Übertragen des Rückmeldedatenpakets an die Quellvorrichtung (S) über die Sicherungsverbindung; und
wobei die vorgegebenen Bedingung Folgende ist: das Ergebnis der Qualitätsbewertung der Primärverbindung liegt unter einem bestimmten Entscheidungsschwellenwert, oder die kumulative Zeit ab Abschluss der Bewertung der Primärverbindungsqualität erreicht einen bestimmten Zeitschwellenwert.

15. System nach Anspruch 12, wobei das Rückkopplungsdatenpaket ferner Testdaten umfasst, die konfiguriert sind, eine Übertragungsverbindung zu erfassen.

## Revendications

1. Procédé de commutation d'une liaison directionnelle à ondes millimétriques entre une liaison principale et une liaison de secours avec un dispositif de destination (D), dans lequel l'une desdites liaisons est une liaison directe et l'autre est une liaison relais, le procédé comprenant les étapes suivantes effectuées dans un dispositif source (S) :
l'évaluation (B1) de la qualité de la liaison de secours en fonction d'un paquet de données de rétroaction reçu en provenance du dispositif de destination (D) par l'intermédiaire de la liaison de secours ; et
le fait de déterminer (B2), sur la base dudit résultat de l'évaluation de la qualité de la liaison de secours et sur la base d'un résultat de l'évaluation de la qualité de la liaison principale intégré dans ledit paquet de données de rétroaction, s'il faut commuter entre la liaison principale et la liaison de secours.

2. Procédé selon la revendication 1, dans lequel l'évaluation (B1) de la qualité de la liaison de secours en fonction du paquet de données de rétroaction reçu en provenance du dispositif de destination (D) par l'intermédiaire de la liaison de secours consiste à :
détecter un indice de performance de la liaison de secours en fonction du paquet de données de rétroaction reçu en provenance du dispositif de destination (D) par l'intermédiaire de la liaison de secours, et à évaluer la qualité de la liaison de secours sur la base de l'indice de performance.

3. Procédé selon la revendication 1, dans lequel le fait de déterminer (B1), sur la base du résultat de l'évaluation de la qualité de la liaison de secours et du résultat de l'évaluation de la qualité de la liaison principale dans le paquet de données de rétroaction, s'il faut commuter entre la liaison principale et la liaison de secours consiste à :
commuter entre la liaison principale et la liaison de secours lorsque le résultat de l'évaluation de la qualité de la liaison de secours est supérieur au résultat de l'évaluation de la qualité de la liaison principale dans le paquet de données de rétroaction ; ou à
commuter entre la liaison principale et la liaison de secours lorsque le résultat de l'évaluation de la qualité de la liaison de secours est supérieur au résultat de l'évaluation de la qualité de la liaison principale dans le paquet de données de rétroaction dans une certaine mesure.

4. Procédé de commutation d'une liaison directionnelle à ondes millimétriques entre une liaison principale et une liaison de secours, dans lequel l'une desdites liaisons est une liaison directe et l'autre est une liaison relais selon la revendication 1, le procédé comprenant les étapes supplémentaires suivantes effectuées dans un dispositif de destination (D) :
l'évaluation (A1), par le dispositif de destination (D), de la qualité de la liaison principale en fonction d'un paquet de données reçu en provenance du dispositif source (S) par l'intermédiaire de la liaison principale ;
l'intégration (A2), par le dispositif de destination (D), du résultat de l'évaluation de la qualité de la liaison principale dans un paquet de données de rétroaction et la transmission du paquet de données de rétroaction au dispositif source (S) par l'intermédiaire de la liaison de secours.

5. Procédé selon la revendication 4, dans lequel l'évaluation (A1), par le dispositif de destination (D), de la qualité de la liaison principale en fonction du paquet de données reçu en provenance du dispositif source (S) par l'intermédiaire de la liaison principale consiste à :
détecter un indice de performance de la liaison principale en fonction du paquet de données reçu en provenance du dispositif source (S) par l'intermédiaire de la liaison principale, et à évaluer la qualité de la liaison principale sur la base de l'indice de performance.

6. Procédé selon la revendication 4, dans lequel l'intégration (A2), par le dispositif de destination (D), du résultat de l'évaluation de la qualité de la liaison principale dans le paquet de données de rétroaction et la transmission du paquet de données de rétroaction au dispositif source (S) par l'intermédiaire de la liaison de secours consistent à :
lorsqu'une condition donnée est satisfaite, intégrer le résultat de l'évaluation de la qualité de la liaison principale dans le paquet de données de rétroaction et à transmettre le paquet de données de rétroaction au dispositif source (S) par l'intermédiaire de la liaison de secours ;
la condition donnée est satisfaite lorsque :
le résultat de l'évaluation de la qualité de la liaison principale est inférieur à un seuil de décision donné, ou le temps cumulé qui s'écoule après l'évaluation de la qualité de la liaison principale atteint un seuil de temps donné.

7. Procédé selon la revendication 4, dans lequel le paquet de données de rétroaction comprend en outre des données de test configurées pour détecter une liaison de transmission.

8. Dispositif source conçu pour effectuer une commutation de liaison directionnelle à ondes millimétriques entre une liaison principale et une liaison de secours avec un dispositif de destination (D), dans lequel l'une desdites liaisons est une liaison directe et l'autre est une liaison relais, le dispositif source (S) comprenant :
un module d'évaluation de la qualité de la liaison de secours (201) configuré pour évaluer la qualité de la liaison de secours en fonction d'un paquet de données de rétroaction reçu en provenance du dispositif de destination (D) par l'intermédiaire de la liaison de secours ; et
un module de décision de commutation (202) configuré pour déterminer, sur la base dudit résultat de l'évaluation de la qualité de la liaison de secours et sur la base d'un résultat de l'évaluation de la qualité de la liaison principale intégré dans ledit paquet de données de rétroaction, s'il faut commuter entre la liaison principale et la liaison de secours.

9. Dispositif source selon la revendication 8, dans lequel le module d'évaluation de la qualité de la liaison de secours (201) est configuré pour détecter un indice de performance de la liaison de secours en fonction du paquet de données reçu en provenance du dispositif de destination (D) par l'intermédiaire de la liaison de secours, et évaluer la qualité de la liaison de secours sur la base de l'indice de performance.

10. Dispositif source selon la revendication 8, dans lequel le module de décision de commutation (202) est configuré pour, lorsque le résultat de l'évaluation de la qualité de la liaison de secours est supérieur au résultat de l'évaluation de la qualité de la liaison principale dans le paquet de données de rétroaction, ou, lorsque le résultat de l'évaluation de la qualité de la liaison de secours est supérieur au résultat de l'évaluation de la qualité de la liaison principale dans le paquet de données de rétroaction dans une certaine mesure, commuter entre la liaison principale et la liaison de secours.

11. Dispositif source selon la revendication 8, dans lequel le paquet de données de rétroaction comprend en outre des données de test configurées pour détecter une liaison de transmission.

12. Système conçu pour effectuer une commutation de liaison directionnelle à ondes millimétriques entre une liaison principale et une liaison de secours, dans lequel l'une desdites liaisons est une liaison directe et l'autre est une liaison relais, le système comprenant :
le dispositif source (S) selon la revendication 8 ; et
un dispositif de destination qui comprend :
un module d'évaluation de la qualité de la liaison principale (101) configuré pour évaluer la qualité de la liaison principale en fonction d'un paquet de données reçu en provenance du dispositif source (S) par l'intermédiaire de la liaison principale ; et
un module de décision de transmission (102) configuré pour intégrer le résultat de l'évaluation de la qualité de la liaison principale dans un paquet de données de rétroaction et transmettre le paquet de données de rétroaction au dispositif source (S) par l'intermédiaire de la liaison de secours.

13. Système selon la revendication 12, dans lequel le module d'évaluation de la qualité de la liaison principale (101) est configuré pour détecter un indice de performance de la liaison principale en fonction du paquet de données reçu en provenance du dispositif source (S) par l'intermédiaire de la liaison principale, et évaluer la qualité de la liaison principale sur la base de l'indice de performance.

14. Système selon la revendication 12, dans lequel le module de décision de transmission (102) est configuré pour, lorsqu'une condition donnée est satisfaite, intégrer le résultat de l'évaluation de la qualité de la liaison principale dans un paquet de données de rétroaction et transmettre le paquet de données de rétroaction au dispositif source (S) par l'intermédiaire de la liaison de secours ; et
la condition donnée est :
le résultat de l'évaluation de la qualité de la liaison principale est inférieur à un seuil de décision donné, ou le temps cumulé qui s'écoule après l'évaluation de la qualité de la liaison principale atteint un seuil de temps donné.

15. Système selon la revendication 12, dans lequel le paquet de données de rétroaction comprend en outre des données de test configurées pour détecter une liaison de transmission.
